# EUROPEAN PATENT APPLICATION

(11) **EP 4 368 332 A1**
(43) Date of publication of application: **15.05.2024**
(21) Application number: 21950055.0
(22) Date of filing: 12.07.2021
(51) Int. Cl.: B23Q 1/00, B23Q 1/01, B23Q 1/64

(54) **MACHINE TOOL**

(71) Applicant: DMG Mori Co., Ltd., Yamatokoriyama-shi, Nara 639-1160 (JP)
(72) Inventor: NISHIKI, Takahiro, Yamatokoriyama-shi, Nara 639-1160 (JP); IKAI, Keisuke, Yamatokoriyama-shi, Nara 639-1160 (JP)
(74) Representative: Isarpatent
(86) International application number: PCT/JP2021/026096
(87) International publication number: WO 2023/286111

(57) **Abstract**

A machine tool includes a support portion (72), a turning portion (221) that includes a workpiece holder (61) and turns about a turning center axis (120), and a rotary joint (231) disposed on the turning center axis (120). The rotary joint (231) includes a movable portion (236) that is fixed to the turning portion (221) and turns together with the turning portion (221), and a fixed portion (237) fixed to the support portion (72) and combined with the movable portion (236). The machine tool further includes a hydraulic pump (241), a first flow path (246) that supplies oil from the hydraulic pump (241) toward the fixed portion (237), a second flow path (247) that is in communication with the first flow path (246) in the rotary joint (231) and supplies the oil from the movable portion (236) toward the workpiece holder (61), and a plurality of hydraulic valves (251) that are provided on the second flow path (247) and control an oil flow toward the workpiece holder (61).

## Description

### TECHNICAL FIELD

The present invention relates to machine tools.

### BACKGROUND ART

For example, WO 2017/080760 (PTL 1) discloses a machine tool including a machine bed, and a workpiece positioning device disposed on the machine bed so as to be movable in a Z-axis direction. The workpiece positioning device is configured to be turnable about an axis parallel to the horizontal direction.

### CITATION LIST

### PATENT LITERATURE

PTL 1: WO 2017/080760

### SUMMARY OF INVENTION

### TECHNICAL PROBLEM

As disclosed in PTL 1 described above, a machine tool is known in which a workpiece holder for detachably holding a workpiece is provided so as to be turnable about an axis (A-axis) parallel to the horizontal axis. In such a machine tool, when a fluid such as oil or air is supplied to the workpiece holder, a rotary joint is used as a flow path connecting portion for connecting a flow path for the fluid between a fixing side and a turning side.

In recent years, however, the number of ports for supplying a fluid to a workpiece holder has increased due to hydraulic supply to a jig, resulting in an increased size (a longer major axis) of a rotary joint. This may make it difficult to secure space in which the rotary joint is disposed or may increase a sliding resistance in the rotary joint.

Therefore, an object of the present invention is to solve the above problem and to provide a machine tool that includes a smaller-sized flow path connecting portion that is used on a flow path for a fluid supplied to a workpiece holder and that is provided for connecting the flow path for the fluid between a fixing side and a turning side.

### SOLUTION TO PROBLEM

A machine tool according to the present invention includes: a support portion; and a turning portion pivotably supported by the support portion around a predetermined axis extending in a horizontal direction or obliquely to the horizontal direction to turn about the predetermined axis. The turning portion includes a workpiece holder disposed apart from the predetermined axis radially outward of the predetermined axis for detachably holding a workpiece. The machine tool further includes: a flow path connecting portion including a movable portion that is fixed to the turning portion and turns about the predetermined axis together with the turning portion, and a fixed portion fixed to the support portion and combined with the movable portion, the flow path connecting portion being disposed on the predetermined axis for connecting a flow path for a fluid between the movable portion and the fixed portion; a fluid pressure generation portion that generates a fluid pressure; a first flow path that supplies the fluid from the fluid pressure generation portion toward the fixed portion; a second flow path that is in communication with the first flow path in the flow path connecting portion and supplies the fluid from the movable portion toward the workpiece holder; and a plurality of valves that are provided on the second flow path and control a fluid flow toward the workpiece holder.

In the machine tool configured as described above, the plurality of valves can be provided downstream of the flow path connecting portion in the fluid flow supplied from the fluid pressure generation portion to the workpiece holder, leading to a reduced number of flow paths provided side by side axially of the predetermined axis in the flow path connecting portion. This can result in a smaller size of the flow path connecting portion axially of the predetermined axis.

Preferably, the turning portion further includes a supported portion extending axially of the predetermined axis and pivotably supported by the support portion. The supported portion has an end surface disposed at an end axially of the predetermined axis. The plurality of valves are connected to the end surface side by side circumferentially around the predetermined axis.

The machine tool configured as described above can include the plurality of valves gathered around the predetermined axis, leading to increased ease of maintenance of the valves. Also, imbalance associated with turning of the turning portion, which results from the installation of the plurality of valves, can be minimized.

Preferably, the supported portion is provided with a first hollow portion that extends on the predetermined axis and is open to the end surface. The machine tool further includes a wiring line inserted into the first hollow portion and extending toward the workpiece holder.

In the machine tool configured as described above, the plurality of valves connected to the end surface of the supported portion can be disposed apart from the wiring line laid in the first hollow portion, thus easily preventing interference between the valves and the wiring line.

Preferably, each of the plurality of valves is a hydraulic valve that controls an oil flow toward the workpiece holder.

The machine tool configured as described above can minimize imbalance associated with turning of the turning portion, which results from the installation of the plurality of valves, even when each valve is a heavy hydraulic valve.

Preferably, the turning portion further includes a supported portion extending axially of the predetermined axis and pivotably supported by the support portion, and an arm portion extending axially of the predetermined axis and radially outward of the predetermined axis from the supported portion, the workpiece holder being mounted on the arm portion. The arm portion is provided with a second hollow portion extending between the supported portion and the workpiece holder. The plurality of valves are disposed in the second hollow portion.

In the machine tool configured as described above, the plurality of valves can be disposed apart from around the predetermined axis where space is highly restricted, thus easily securing space for installation of the valves.

Preferably, each of the plurality of valves is a pneumatic valve that controls an air flow toward the workpiece holder.

In the machine tool configured as described above, the pneumatic valve can be lightweight, thus minimizing an increase in imbalance associated with turning of the turning portion, which results from the installation of the valves, even when the valves are disposed apart from around the predetermined axis.

### ADVANTAGEOUS EFFECTS OF INVENTION

As described above, the present invention can provide a machine tool that can include a smaller-sized flow path connecting portion that is used on a flow path for a fluid supplied to a workpiece holder for connecting the flow path for the fluid between a fixing side and a turning side.

### BRIEF DESCRIPTION OF DRAWINGS

Fig. 1 is a perspective view of a machine tool (in a reference position of a table) in Embodiment 1 of the present invention.
Fig. 2 is a perspective view of the machine tool (in an inverted position of the table) in Embodiment 1 of the present invention.
Fig. 3 is a sectional view partially showing the table in Figs. 1 and 2.
Fig. 4 is a view showing the table as viewed in a direction indicated by the arrow IV in Fig. 3.
Fig. 5 is a sectional view of a coupling structure between a supported portion and a workpiece holder in the table in Fig. 3.
Fig. 6 is a diagram schematically showing a hydraulic pressure path to the table in Fig. 3.
Fig. 7 is a diagram schematically showing a hydraulic pressure path in a comparative example.
Fig. 8 is a sectional view partially showing a table of a machine tool in Embodiment 2 of the present invention.
Fig. 9 is a sectional view of a coupling structure between a supported portion and a workpiece holder in the table in Fig. 8.

### DESCRIPTION OF EMBODIMENTS

Embodiments of the present invention will be described with reference to the drawings. In the drawings referred to below, the same or corresponding elements have the same reference characters allotted.

### Embodiment 1

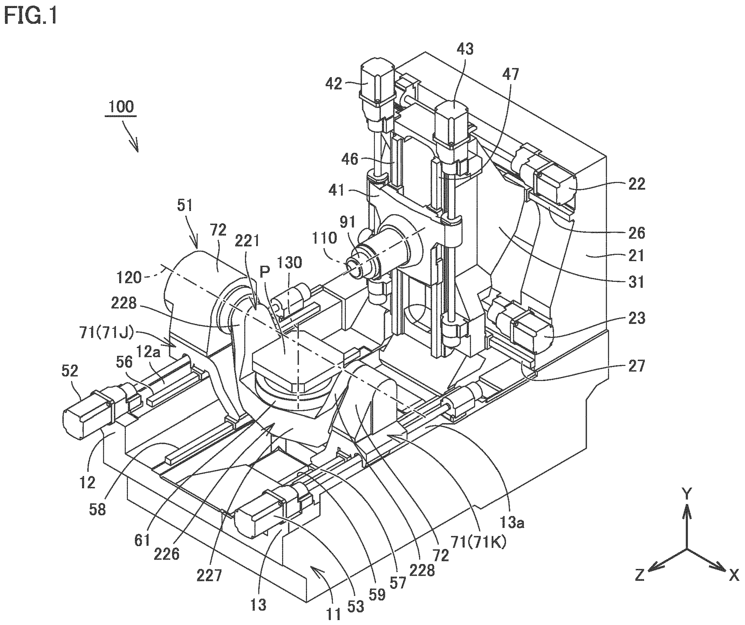

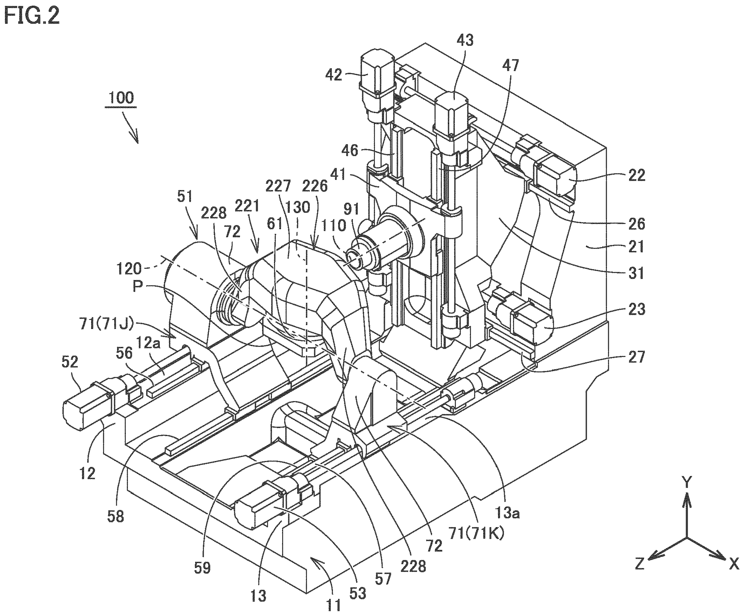

Fig. 1 is a perspective view of a machine tool (in a reference position of a table) in Embodiment 1 of the present invention. Fig. 2 is a perspective view of the machine tool (in an inverted position of the table) in Embodiment 1 of the present invention. The figures show an internal structure of the machine tool which is seen through a cover body that forms the external appearance of the machine tool.

Referring to Figs. 1 and 2, a machine tool 100 in the present embodiment is a machining center that machines a workpiece by bringing a rotating tool into contact with the workpiece, and more particularly, a horizontal machining center with a rotation center axis of a tool extending horizontally. Machine tool 100 is a numerically controlled (NC) machine tool in which various operations for machining a workpiece are automated through numerical control by a computer.

In this specification, an axis parallel to the horizontal direction and parallel to the rotation center axis of the tool is referred to as "Z-axis", an axis parallel to the horizontal direction and orthogonal to the rotation center axis of the tool is referred to as "X-axis", and an axis parallel to the vertical axis is referred to as "Y-axis". In the sheets of paper of Figs. 1 and 2, a direction facing the viewer in the lower left diagonal is "+Z-axis direction", and ta direction facing away from the viewer in the upper right diagonal is "-Z-axis direction". In the sheets of paper of Figs. 1 and 2, a direction facing the viewer in the lower right diagonal is "+X-axis direction", and a direction facing away from the viewer in the upper left diagonal is "-X-axis direction". An upward direction is "+Y-axis direction", and a downward direction is "-Y-axis direction".

First, an overall structure of machine tool 100 will be described. Machine tool 100 includes a bed 11, a column 21, a saddle 31, a cross slide 41, a tool spindle 91, and a table 51.

Bed 11 is a base member for supporting column 21, saddle 31, cross slide 41, tool spindle 91, table 51, and the like, and is placed on a floor of a factory or the like. Bed 11 is made of a metal such as cast iron.

Bed 11 includes a first peripheral wall portion 12 and a second peripheral wall portion 13. First peripheral wall portion 12 and second peripheral wall portion 13 are provided on the periphery of bed 11 in top view. First peripheral wall portion 12 and second peripheral wall portion 13 are provided at the opposite ends of bed 11 in the X-axis direction. First peripheral wall portion 12 is provided at an end of bed 11 in the -X-axis direction. Second peripheral wall portion 13 is provided at an end of bed 11 in the +X-axis direction. First peripheral wall portion 12 and second peripheral wall portion 13 extend along the Z-axis direction while having a wall shape rising upward.

First peripheral wall portion 12 has a first top surface 12a. Second peripheral wall portion 13 has a second top surface 13a. First top surface 12a and second top surface 13a are planes parallel to the X-axis-Z-axis plane. First top surface 12a and second top surface 13a are oriented upward.

Column 21 is provided upright on bed 11. Column 21 has a gate shape that rises upward from bed 11 in its entirety. Column 21 is fixed to bed 11. Column 21 is disposed at an end of bed 11 in the -Z-axis direction.

Saddle 31 is supported by column 21. Saddle 31 is provided on the front surface of column 21 which is oriented in the +Z-axis direction. Saddle 31 has a gate shape that rises upward from bed 11 in its entirety. Saddle 31 is movable relative to column 21 in the X-axis direction by feeders 22, 23 and guide portions 26, 27 provided to column 21 or the like.

Cross slide 41 is supported by saddle 31. Cross slide 41 is provided on the front surface of saddle 31 which is oriented in the +Z-axis direction. Cross slide 41 has a plate shape parallel to the X-axis-Y-axis plane in its entirety. Cross slide 41 is movable relative to saddle 31 in the Y-axis direction (upward-downward direction) by feeders 42, 43 and guide portions 46, 47 provided to saddle 31 or the like.

Tool spindle 91 is supported by cross slide 41. Tool spindle 91 is fixed to cross slide 41. Tool spindle 91 projects in the +Z-axis direction from cross slide 41.

Tool spindle 91 is rotatable about a central axis 110 parallel to the Z-axis as it is driven by a motor. Tool spindle 91 holds a tool for machining a workpiece in machine tool 100. The tool held by tool spindle 91 rotates about central axis 110 as tool spindle 91 rotates.

Table 51 is provided on bed 11. Table 51 is provided apart from column 21, saddle 31, and cross slide 41 in the +Z-axis direction. Table 51 is a device for holding a workpiece. Table 51 holds a workpiece at a position at which the workpiece faces tool spindle 91 in the Z-axis direction.

Table 51 is movable relative to bed 11 in the Z-axis direction by feeders 52, 53 and guide portions 56, 57, 58, 59 provided to bed 11 or the like. Table 51 can turn about turning center axis 120 parallel to the X-axis direction as it is driven by a motor. Table 51 can rotate about a rotation center axis 130 orthogonal to turning center axis 120 as it is driven by a motor.

Though not shown, a tool magazine for storing a plurality of tools is provided so as to be adjacent to bed 11 in the -X-axis direction. The tools stored in the tool magazine and the tools held by tool spindle 91 are exchanged by an automatic tool changer (ATC).

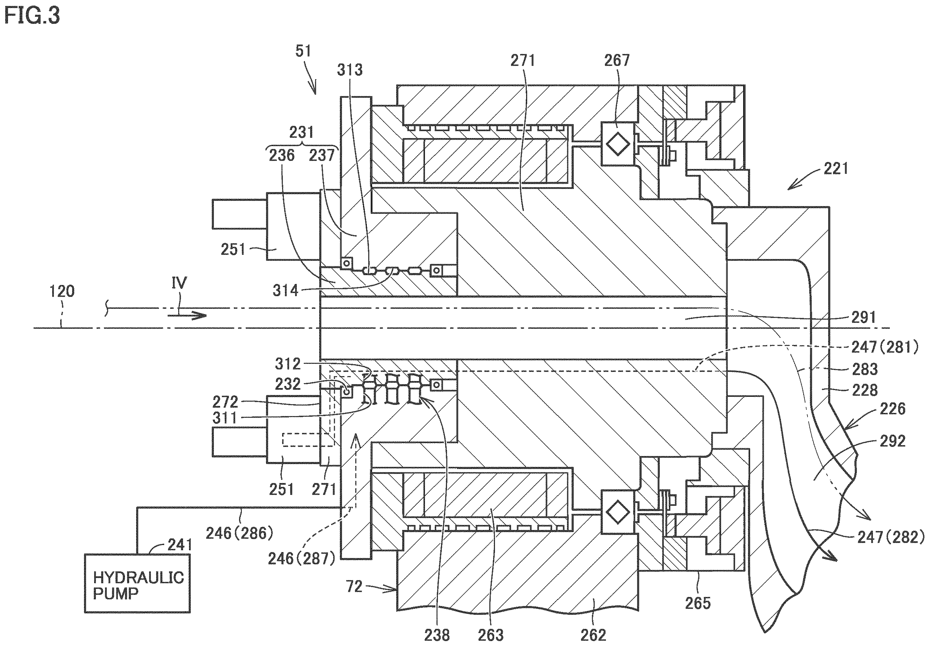

Next, a structure of table 51 will be described. Fig. 3 is a sectional view partially showing the table in Figs. 1 and 2.

Referring to Figs. 1 to 3, machine tool 100 (table 51) includes a turning portion 221 and a table base 71.

Turning portion 221 is a portion that turns about turning center axis 120 in table 51. Turning center axis 120 extends horizontally (X-axis direction). Table base 71 supports a support portion 72, which will be described later, on bed 11.

Turning portion 221 includes a workpiece holder 61. Workpiece holder 61 is disposed apart from turning center axis 120 radially outward of turning center axis 120. Workpiece holder 61 is provided between first peripheral wall portion 12 and second peripheral wall portion 13 in the X-axis direction.

Workpiece holder 61 can detachably hold a workpiece. A pallet P is detachably attached to workpiece holder 61. Workpiece holder 61 has therein a clamp mechanism portion for clamping pallet P, a rotary mechanism portion for rotating pallet P about rotation center axis 130, and a braking mechanism portion for regulating the rotation of pallet P about rotation center axis 130.

For example, a jig, such as an angle rest, to which a workpiece is attached is mounted on pallet P. The workpiece held by workpiece holder 61 moves in the circumferential direction of turning center axis 120 as turning portion 221 turns about turning center axis 120.

Table base 71 is composed of a first table base 71J and a second table base 71K. First table base 71J and second table base 71K are provided apart from each other in the X-axis direction. First table base 71J and second table base 71K are divided in the X-axis direction. First table base 71J is connected with feeder 52, guide portion 56, and guide portion 58. Second table base 71K is connected with feeder 53, guide portion 57, and guide portion 59.

Machine tool 100 (table 51) further includes support portion 72. Support portion 72 is provided to each of first table base 71J and second table base 71K. Support portion 72 is provided on each top surface of first top surface 12a and second top surface 13a. Turning portion 221 is supported by support portion 72 to be pivotable about turning center axis 120.

Turning portion 221 further includes a supported portion 271 (see Fig. 3) and an arm portion 226. Supported portion 271 is disposed around turning center axis 120. Supported portion 271 extends axially of turning center axis 120. Supported portion 271 is provided inside support portion 72. Supported portion 271 is a portion pivotally supported by support portion 72 in turning portion 221.

As shown in Fig. 3, supported portion 271 is provided with a first hollow portion 291. First hollow portion 291 extends on turning center axis 120. First hollow portion 291 passes through supported portion 271 axially of turning center axis 120.

Arm portion 226 is provided across first peripheral wall portion 12 and second peripheral wall portion 13 in the X-axis direction. Arm portion 226 is connected to supported portion 271 on each peripheral wall portion of first peripheral wall portion 12 and second peripheral wall portion 13. Arm portion 226 supports workpiece holder 61 between first peripheral wall portion 12 and second peripheral wall portion 13.

Arm portion 226 includes an arm middle portion 227 and an arm coupling portion 228. Arm middle portion 227 is provided in the middle portion between first peripheral wall portion 12 and second peripheral wall portion 13 in the X-axis direction. Arm coupling portion 228 couples arm middle portion 227 to supported portion 271 on each peripheral wall portion of first peripheral wall portion 12 and second peripheral wall portion 13.

Arm middle portion 227 supports workpiece holder 61 from radially outward of turning center axis 120. Arm middle portion 227 is disposed in parallel to turning center axis 120. Pallet P attached to workpiece holder 61 is disposed radially outward of turning center axis 120 and radially inward of arm middle portion 227.

Arm coupling portion 228 is provided between arm middle portion 227 and supported portion 271 axially (in the X-axis direction) of turning center axis 120. Arm coupling portion 228 extends radially inward of turning center axis 120 and axially of turning center axis 120, from workpiece holder 61 toward supported portion 271.

Referring to Fig. 3, support portion 72 includes a housing 262, a stator 263, and a braking mechanism portion 265.

Housing 262 has a housing shape around turning center axis 120. Supported portion 271 is inserted into housing 262 via a bearing 267.

Stator 263 is provided in housing 262. Stator 263 configures a motor for providing a rotational force around turning center axis 120 to supported portion 271, together with a rotor (not shown) provided in supported portion 271. Braking mechanism portion 265 is provided in housing 262. Braking mechanism portion 265 regulates turning of supported portion 271 about turning center axis 120.

Machine tool 100 (table 51) further includes a rotary joint 231. Rotary joint 231 is provided on turning center axis 120. Rotary joint 231 is inserted between turning portion 221 (supported portion 271) on the rotating side and support portion 72 on the fixing side. Rotary joint 231 is provided for connecting a flow path for a fluid between turning portion 221 (supported portion 271) and support portion 72.

Rotary joint 231 includes a movable portion 236 and a fixed portion 237. Movable portion 236 is fixed to turning portion 221. Movable portion 236 turns about turning center axis 120 together with turning portion 221. Fixed portion 237 is fixed to support portion 72. Fixed portion 237 is combined with movable portion 236 to form a plurality of fluid passages 238, which will be described below.

Movable portion 236 is disposed around turning center axis 120. Movable portion 236 has a cylindrical shape around turning center axis 120 in its entirety. Movable portion 236 is provided side by side with supported portion 271 axially of turning center axis 120. Movable portion 236 is fixed to supported portion 271.

Fixed portion 237 is disposed around turning center axis 120. Fixed portion 237 has a cylindrical shape around turning center axis 120 in its entirety. Fixed portion 237 is combined with movable portion 236 radially of turning center axis 120. Fixed portion 237 is fitted on the outer circumference of movable portion 236 via a bearing 232. Fixed portion 237 is provided side by side with stator 263 axially of turning center axis 120. Fixed portion 237 is fixed to stator 263.

Fluid passages 238 are provided in rotary joint 231. Each fluid passage 238 is composed of a fixing-side passage 311, a fixing-side annular passage 314, a movable-side annular passage 313, and a movable-side passage 312 at a boundary between fixed portion 237 and movable portion 236.

Fixing-side annular passage 314 is provided in fixed portion 237. Movable-side annular passage 313 is provided in movable portion 236. Fixing-side annular passage 314 is recessed from the inner circumferential surface of fixed portion 237 and extends annularly around turning center axis 120. Movable-side annular passage 313 is recessed from the outer circumferential surface of movable portion 236 and extends annularly around turning center axis 120. Movable-side annular passage 313 faces fixing-side annular passage 314 radially of turning center axis 120.

Fixing-side annular passage 314 and movable-side annular passage 313 are paired to form a passage extending annularly around turning center axis 120. Paired fixing-side annular passages 314 and movable-side annular passages 313 are provided while being spaced from each other axially of turning center axis 120.

Fixing-side passage 311 is provided in fixed portion 237. Fixing-side passage 311 is open to the wall surface of fixing-side annular passage 314 at a predetermined phase position in the circumferential direction of turning center axis 120. Movable-side passage 312 is provided in movable portion 236. Movable-side passage 312 is open to the wall surface of movable-side annular passage 313 at a predetermined phase position in the circumferential direction of turning center axis 120.

The fluid that circulates through fluid passage 238 may be oil or air. The oil circulating through fluid passage 238 is used as hydraulic oil for activating various hydraulic machines in workpiece holder 61. The hydraulic machine may be, for example, a clamp mechanism portion or a braking mechanism portion for pallet P, or a clamp mechanism for a workpiece mounted on the jig on pallet P.

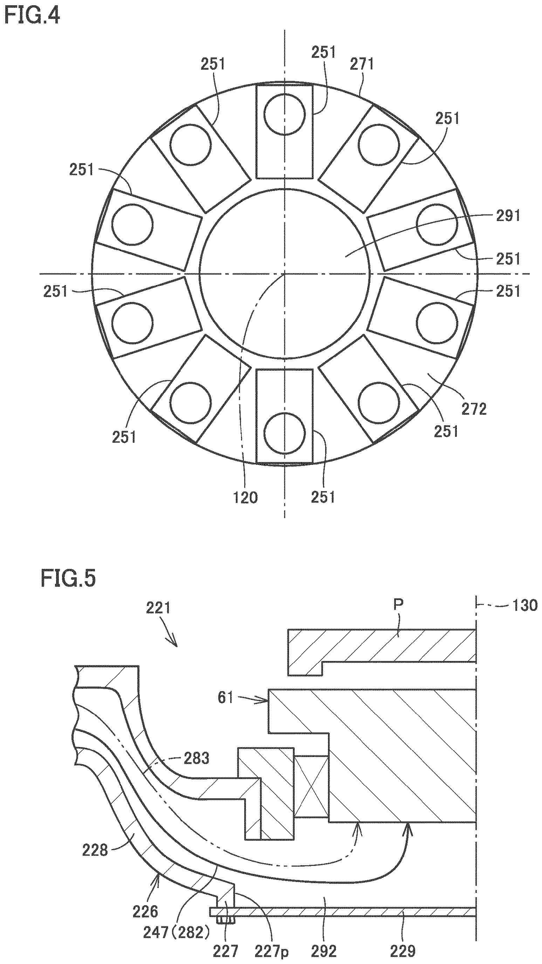

Fig. 4 is a view showing the table as viewed in the direction indicated by the arrow IV in Fig. 3. Fig. 5 is a sectional view showing a coupling structure between the supported portion and the workpiece holder in the table in Fig. 3.

Referring to Figs. 3 to 5, arm portion 226 is provided with a second hollow portion 292. Second hollow portion 292 extends between supported portion 271 and workpiece holder 61. Second hollow portion 292 has a hollow shape between arm middle portion 227 and arm coupling portion 228. Second hollow portion 292 is in communication with first hollow portion 291.

An opening 227p is provided in arm middle portion 227. Opening 227p forms an opening surface parallel to the plane orthogonal to rotation center axis 130. The opening surface formed by opening 227p faces workpiece holder 61 axially of rotation center axis 130. Opening 227p causes second hollow portion 292 to be open to the outer space. A lid body 229 for closing opening 227p is detachably attached to arm middle portion 227.

Machine tool 100 further includes a hydraulic pump 241, a first flow path 246, a second flow path 247, and a plurality of hydraulic valves 251.

Hydraulic pump 241 generates a hydraulic pressure. Hydraulic pump 241 is placed outside of machine tool 100.

First flow path 246 supplies oil from hydraulic pump 241 toward fixed portion 237. Second flow path 247 is in communication with first flow path 246 in rotary joint 231. Second flow path 247 supplies the oil from movable portion 236 toward workpiece holder 61. First flow path 246 and second flow path 247 form a passage through which the oil circulates.

First flow path 246 includes a pipe 286, which extends between hydraulic pump 241 and fixed portion 237, and a fluid passage 287, which is provided in fixed portion 237 and is in communication with fixing-side passage 311. Second flow path 247 includes a fluid passage 281, which is provided in movable portion 236 and supported portion 271 and is in communication with movable-side passage 312, and a pipe 282, which extends between supported portion 271 and workpiece holder 61. Pipe 282 is laid in second hollow portion 292.

Hydraulic valves 251 control an oil flow toward workpiece holder 61. Hydraulic valves 251 are provided on second flow path 247. Hydraulic valves 251 are provided downstream of the oil flow supplied from hydraulic pump 241 toward workpiece holder 61 relative to rotary joint 231.

Supported portion 271 has an end surface 272. End surface 272 is provided at an end of supported portion 271 axially of turning center axis 120. End surface 272 is formed of a surface crossing turning center axis 120. End surface 272 is formed of a plane orthogonal to turning center axis 120. End surface 272 is provided, axially of turning center axis 120, opposite to the side on which end surface 272 faces workpiece holder 61. First hollow portion 291 is open to end surface 272.

Hydraulic valves 251 are connected to turning portion 221. Hydraulic valves 251 are connected to supported portion 271. Hydraulic valves 251 are connected to end surface 272. Hydraulic valves 251 are provided apart from turning center axis 120 radially outward of turning center axis 120. Hydraulic valves 251 are provided side by side in the circumferential direction around turning center axis 120. Hydraulic valves 251 are spaced from each other in the circumferential direction of turning center axis 120. Hydraulic valves 251 may be equally or unequally spaced from each other in the circumferential direction of turning center axis 120.

Machine tool 100 further includes a wiring line 283. Wiring line 283 is inserted into first hollow portion 291. Wiring line 283 passes through first hollow portion 291 and second hollow portion 292 in the stated order and extends toward workpiece holder 61. Wiring line 283 is connected to various electrical devices in workpiece holder 61. The electrical devices may be, for example, motors or various sensors.

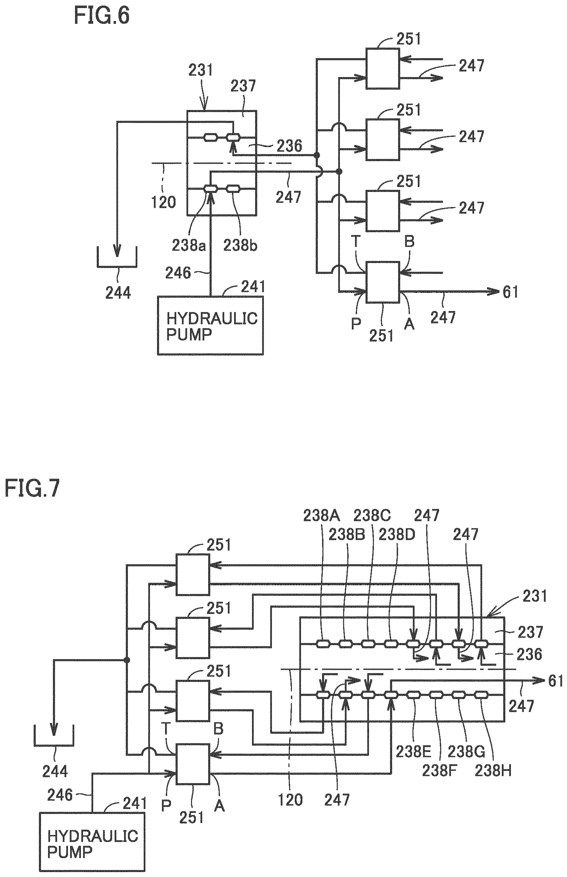

Fig. 6 is a diagram schematically showing a hydraulic pressure path to the table in Fig. 3. Fig. 7 is a diagram schematically showing a hydraulic pressure path in a comparative example.

Figs. 6 and 7 show four hydraulic valves 251, which are direction switch valves each having a P port, a T port, an A port, and a B port, by way of example. Oil supplied from hydraulic pump 241 flows to the P port. Oil collected toward tank 244 flows to the T port. Oil supplied to various hydraulic pressure devices in workpiece holder 61 or collected from the hydraulic pressure devices flows to the A port and B port.

Referring to Fig. 7, in the comparative example, hydraulic valves 251 are provided on first flow path 246 through which the oil is supplied from hydraulic pump 241 to fixed portion 237 of rotary joint 231. In such a configuration, the fluid passages extend between the A port and the B port of each hydraulic valve 251 and the hydraulic pressure devices of workpiece holder 61, and these two fluid passages are provided for each hydraulic valves 251, and accordingly, eight fluid passages (238A to 238H) need to be provided in rotary joint 231. In this case, the length of rotary joint 231 axially of turning center axis 120 increases, which may make it difficult to secure space in which rotary joint 231 is disposed or may increase a sliding resistance in rotary joint 231.

Referring to Fig. 6, contrastingly, hydraulic valves 251 are provided on second flow path 247 that supplies the oil from movable portion 236 of rotary joint 231 toward workpiece holder 61 in the present embodiment. Such a configuration is only required to provide rotary joint 231 with a fluid passage 238a for collectively supplying the oil from hydraulic pump 241 toward the P ports of hydraulic valves 251 and a fluid passage 238b for collectively collecting the oil from the T ports of hydraulic valves 251 toward tank 244. This can reduce the length of rotary joint 231 axially of turning center axis 120.

As shown in Figs. 3 and 4, hydraulic valves 251 are connected to end surface 272 of supported portion 271. In such a configuration, hydraulic valves 251 can be gathered around turning center axis 120, leading to increased ease of maintenance of hydraulic valves 251.

Also, imbalance associated with turning of turning portion 221, which results from the installation of hydraulic valves 251, can be minimized. Particularly in the present embodiment, since hydraulic valve 251 has a heavy weight, it is important to suppress imbalance resulting from the installation of hydraulic valves 251.

In the present embodiment, also, wiring line 283 is inserted into first hollow portion 291 that extends on turning center axis 120 and is open to end surface 272. In such a configuration, in turning of turning portion 221, wiring line 283 inserted into first hollow portion 291 stays on turning center axis 120, whereas hydraulic valves 251 connected to end surface 272 move in the circumferential direction of turning center axis 120 around an opening of first hollow portion 291 in end surface 272. This can prevent interference from occurring between wiring line 283 and hydraulic valves 251 as turning portion 221 turns.

To summarize the structure of machine tool 100 in Embodiment 1 of the present invention described above, machine tool 100 in the present embodiment includes support portion 72, and turning portion 221 pivotably supported by support portion 72 around turning center axis 120 serving as a predetermined axis extending horizontally to turn about turning center axis 120. Turning portion 221 is disposed apart from turning center axis 120 radially outward of turning center axis 120 and includes workpiece holder 61 for detachably holding a workpiece. Machine tool 100 includes: rotary joint 231 serving as a fluid pressure generation portion including movable portion 236 that is fixed to turning portion 221 and turns about turning center axis 120 together with turning portion 221, and fixed portion 237 fixed to support portion 72 and combined with movable portion 236, the flow path connecting portion being disposed on turning center axis 120 for connecting a flow path for a fluid between movable portion 236 and fixed portion 237; hydraulic pump 241 serving as a fluid pressure generation portion that generates a hydraulic pressure as a fluid pressure; first flow path 246 that supplies oil as a fluid from hydraulic pump 241 toward fixed portion 237; second flow path 247 that is in communication with first flow path 246 in rotary joint 231 and supplies the oil from movable portion 236 toward workpiece holder 61; and hydraulic valves 251 serving as a plurality of valves that are provided on second flow path 247 and control an oil flow toward workpiece holder 61.

In machine tool 100 in Embodiment 1 of the present embodiment which has the above configuration, the size (axis) of rotary joint 231 can be reduced axially of turning center axis 120 even when the number of ports for supplying a hydraulic pressure to workpiece holder 61 increases.

Although the present embodiment has described table 51 turnable about turning center axis 120 extending horizontally, the present invention may be applied to a table turnable about the turning center axis extending obliquely (e.g., in the direction 45° inclined to the horizontal direction) to the horizontal direction. The flow path connecting portion in the present invention is not limited to a rotary joint and may have a configuration in which, for example, a flow path connecting structure for a fluid between the fixing side and the rotating side is configured by a pipe itself.

### Embodiment 2

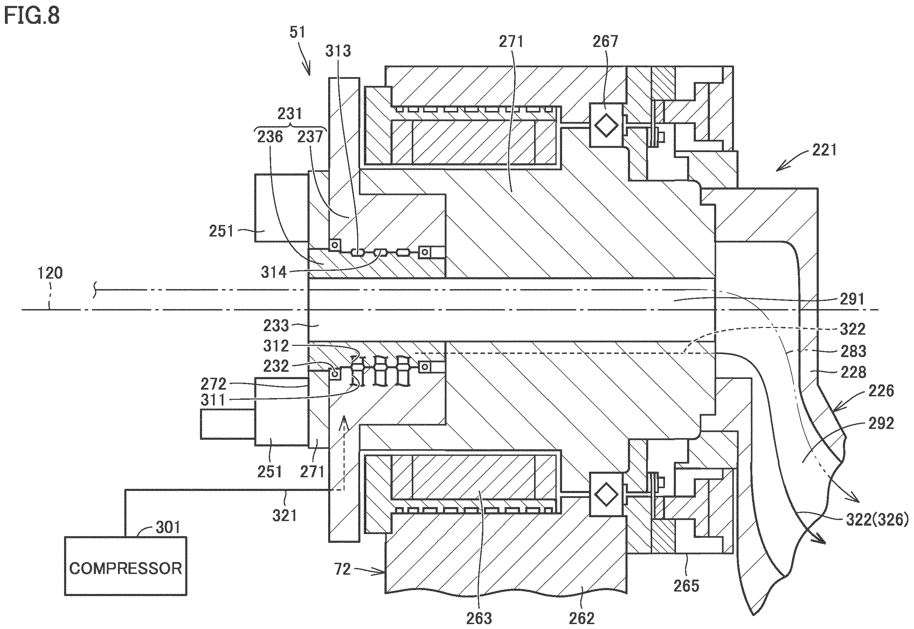

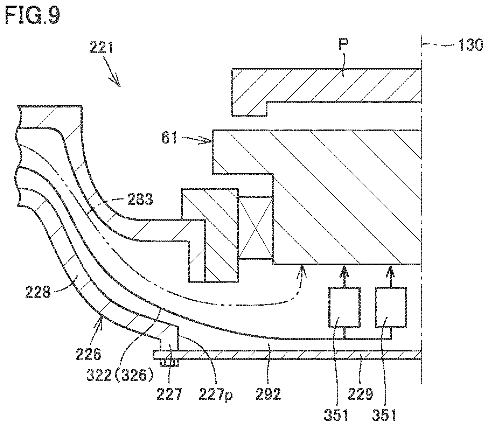

Fig. 8 is a sectional view partially showing a table of a machine tool in Embodiment 2 of the present invention. Fig. 9 is a sectional view showing a coupling structure between a supported portion and a workpiece holder in the table in Fig. 8. Figs. 8 and 9 correspond to Figs. 3 and 5 in Embodiment 1, respectively.

The machine tool in the present embodiment basically has the same structure as that of machine tool 100 in Embodiment 1. A redundant structure will not be repeatedly described below.

Referring to Figs. 8 and 9, the machine tool in the present embodiment further includes a compressor 301, a first flow path 321, a second flow path 322, and a plurality of pneumatic valves 351.

Compressor 301 generates an air pressure. Compressor 301 is placed outside of the machine tool. First flow path 321 supplies the air from compressor 301 toward fixed portion 237 of rotary joint 231. Second flow path 322 is in communication with first flow path 321 in rotary joint 231. Second flow path 322 supplies the air from movable portion 236 of rotary joint 231 toward workpiece holder 61. First flow path 246 and second flow path 247 form a passage through which the air can circulate.

Pneumatic valves 351 control an air flow toward workpiece holder 61. Pneumatic valves 351 are provided on second flow path 322. Pneumatic valves 351 are provided downstream of the air flow supplied from compressor 301 toward workpiece holder 61 relative to rotary joint 231.

Second flow path 322 includes a pipe 326 extending between supported portion 271 and workpiece holder 61. Pneumatic valves 351 are provided on pipe 326. Pneumatic valves 351 are disposed in second hollow portion 292. Pneumatic valves 351 are provided to face an opening surface formed by opening 227p.

With such a configuration, pneumatic valves 351 can be provided on second flow path 322 that supplies the air from movable portion 236 of rotary joint 231 toward workpiece holder 61, resulting in a reduced length of rotary joint 231 axially of turning center axis 120 as in Embodiment 1.

Pneumatic valves 351 are disposed in second hollow portion 292 of arm portion 226. Thus, pneumatic valves 351 can be disposed apart from around turning center axis 120 where space is highly restricted, easily securing space for installation of pneumatic valves 351. In this case, pneumatic valve 351 is more lightweight than hydraulic valve 251, thereby suppressing an increase in imbalance associated with turning of turning portion 221 even though pneumatic valves 351 are disposed apart from around turning center axis 120.

The machine tool in Embodiment 2 of the present invention which has the above configuration can exhibit effects similar to those of Embodiment 1.

It should be understood that the embodiments disclosed herein have been presented for the purpose of illustration and non-restrictive in every respect. It is therefore intended that the scope of the present invention is defined by claims, not only by the description above, and encompasses all modifications and variations equivalent in meaning and scope to the claims.

### INDUSTRIAL APPLICABILITY

The present invention is applied to a machine tool such as a machining center or a multitasking machine.

### REFERENCE SIGNS LIST

11 bed; 12 first peripheral wall portion; 12a first top surface; 13 second peripheral wall portion; 13a second top surface; 21 column; 22, 23, 42, 43, 52, 53 feeder; 26, 27, 46, 47, 56, 57, 58, 59 guide portion; 31 saddle; 41 cross slide; 51 table; 61 workpiece holder; 71 table base; 71J first table base; 71K second table base; 72 support portion; 91 tool spindle; 100 machine tool; 110 central axis; 120 turning center axis; 130 rotation center axis; 221 turning portion; 226 arm portion; 227 arm middle portion; 227p opening; 228 arm coupling portion; 229 lid body; 231 rotary joint; 232, 267 bearing; 236 movable portion; 237 fixed portion; 238, 238a, 238b, 238A-238H, 281, 287 fluid passage; 241 hydraulic pump; 244 tank; 246, 321 first flow path; 247, 322 second flow path; 251 hydraulic valve; 262 housing; 263 stator; 265 braking mechanism portion; 271 supported portion; 272 end surface; 282, 286, 326 pipe; 283 wiring line; 291 first hollow portion; 292 second hollow portion; 301 compressor; 311 fixing-side passage; 312 movable-side passage; 313 movable-side annular passage; 314 fixing-side annular passage; 351 pneumatic valve; P pallet.

## Claims

1. A machine tool comprising:
a support portion; and
a turning portion pivotably supported by the support portion around a predetermined axis extending in a horizontal direction or obliquely to the horizontal direction to turn about the predetermined axis,
the turning portion including a workpiece holder disposed apart from the predetermined axis radially outward of the predetermined axis for detachably holding a workpiece,
the machine tool further comprising:
a flow path connecting portion including a movable portion that is fixed to the turning portion and turns about the predetermined axis together with the turning portion, and a fixed portion fixed to the support portion and combined with the movable portion, the flow path connecting portion being disposed on the predetermined axis for connecting a flow path for a fluid between the movable portion and the fixed portion;
a fluid pressure generation portion that generates a fluid pressure;
a first flow path that supplies the fluid from the fluid pressure generation portion toward the fixed portion;
a second flow path that is in communication with the first flow path in the flow path connecting portion and supplies the fluid from the movable portion toward the workpiece holder; and
a plurality of valves that are provided on the second flow path and control a fluid flow toward the workpiece holder.

2. The machine tool according to claim 1, wherein
the turning portion further includes a supported portion extending axially of the predetermined axis and pivotably supported by the support portion,
the supported portion has an end surface disposed at an end axially of the predetermined axis, and
the plurality of valves are connected to the end surface side by side circumferentially around the predetermined axis.

3. The machine tool according to claim 2, wherein
the supported portion is provided with a first hollow portion that extends on the predetermined axis and is open to the end surface,
the machine tool further comprises a wiring line inserted into the first hollow portion and extending toward the workpiece holder.

4. The machine tool according to claim 2 or 3, wherein each of the plurality of valves is a hydraulic valve that controls an oil flow toward the workpiece holder.

5. The machine tool according to claim 1, wherein
the turning portion includes
a supported portion extending axially of the predetermined axis and pivotably supported by the support portion, and
an arm portion extending axially of the predetermined axis and radially outward of the predetermined axis from the supported portion, the workpiece holder being mounted on the arm portion,
the arm portion is provided with a second hollow portion extending between the supported portion and the workpiece holder, and
the plurality of valves are disposed in the second hollow portion.

6. The machine tool according to claim 5, wherein each of the plurality of valves is a pneumatic valve that controls an air flow toward the workpiece holder.
